# EUROPEAN PATENT APPLICATION

(11) **EP 4 159 791 A1**
(43) Date of publication of application: **05.04.2023**
(21) Application number: 21814180.2
(22) Date of filing: 20.05.2021
(51) Int. Cl.: C08G 69/26, C08K 5/00, C08K 5/5313, C08L 77/06, B29C 65/16, C08K 3/00, C08K 3/013, C08K 3/16, C08K 3/22

(54) **LIGHT-TRANSMITTING RESIN COMPOSITION FOR LASER WELDING, MOLDED ARTICLE, KIT, AND METHOD FOR PRODUCING MOLDED ARTICLE**

(30) Priority: 25.05.2020 JP 2020090938; 01.03.2021 JP 2021031960
(71) Applicant: Mitsubishi Engineering-Plastics Corporation, Tokyo 105-0021 (JP)
(72) Inventor: OKAMOTO, Fumihito, Hiratsuka-shi, Kanagawa 254-0016 (JP)
(74) Representative: Zimmermann & Partner Patentanwälte mbB
(86) International application number: PCT/JP2021/019114
(87) International publication number: WO 2021/241382

(57) **Abstract**

To provide a transmissive resin composition for laser welding, demonstrating low light transmittance in a specific wavelength range, and high transmittance of light for laser welding; a formed article; a kit; a method for manufacturing a formed article; and, a car-borne camera. A transmissive resin composition for laser welding comprising, per 100 parts by mass of a polyamide resin: 10 to 120 parts by mass of a reinforcing filler; and a light-transmissive coloring matter having a perylene skeleton, the polyamide resin including a diamine-derived structural unit and a dicarboxylic acid-derived structural unit, in which 70 mol% or more of the diamine-derived structural unit being derived from xylylenediamine, and 70 mol% or more of the dicarboxylic acid-derived structural unit being derived from straight chain aliphatic α,ω-dicarboxylic acid having 4 to 8 carbon atoms.

## Description

### TECHNICAL FIELD

This invention relates to a transmissive resin composition for laser welding, a formed article, a kit, a method for manufacturing a formed article, and, a car-borne camera. The resin composition of this invention is mainly used for a resin composition (light-transmissive resin composition) placed on the side the light for laser welding can transmit therethrough.

### BACKGROUND ART

Polyamide resin, a representative engineering plastic, is easy to process, and further excels in mechanical property, electrical property, heat resistance, and other physicochemical properties, and has therefore been widely applied to vehicle component, electrical/electronic equipment parts, other precision equipment parts and so forth. Also morphologically intricate parts have increasingly been manufactured by using the polyamide resin, so that parts having a hollow section, such as intake manifold, have been bonded with the aid of a variety of welding technologies including adhesive welding, vibration welding, ultrasonic welding, hot plate welding, injection welding and laser welding.

Adhesive welding has, however, suffered from loss of time due to the curing time, and environmental impact such as peripheral pollution. Ultrasonic welding and hot plate welding have been reported to damage the product due to vibration and heat, and to require post-process for removing abrasion powder or produced burr. Injection welding has often required to use specialized dies and molding machines, and has been feasible only with use of highly fluidic material.

On the other hand, laser welding is a method of bonding, by which a laser light transmitting (also referred to as non-absorptive or poorly-absorptive) resin member (occasionally referred to as "transmissive resin member", hereinafter), and a laser light-absorptive resin member (occasionally referred to as "absorptive resin member", hereinafter) are brought into contact and welded, thereby bonding both resin members. More specifically, the absorptive member is melted by energy of the laser light, the generated heat conducts from the absorptive member to the transmissive member, the both members are melted, and then cooled and solidified to cause melt bonding. Since laser welding produces neither abrasion powder nor burr, causes less damage on the product, and since polyamide resin *per se* has a relatively high laser transmittance, so that recent attention has been focused on process of the polyamide resin products with the aid of laser welding technology.

The transmissive resin member is usually formed of a transmissive resin composition. Patent Literature 1 describes, as such transmissive resin composition, a polyamide resin composition that contains 25 to 50% by mass of a semiaromatic polyamide resin, 3 to 20% by mass of a bromine-containing flame retardant, 1.5 to 10% by mass of zinc titanate, and a light-transmissive coloring matter.

### CITATION LIST

### PATENT LITERATURE

[Patent Literature 1] JP 2020-012093 A

### SUMMARY OF THE INVENTION

### TECHNICAL PROBLEM

The aforementioned Patent Literature 1 describes use of various polyamide resins to laser welding.

On the other hand, recent laser-welded article (formed article) obtainable by the laser welding has occasionally been required to suppress transmission of light in specific wavelength ranges (typically at 700 to 800 nm wavelength, and/or 300 to 500 nm wavelength), depending on applications. Also in this case, the resin composition for laser welding necessarily keeps high transmittance of light for laser welding (typically beam at or around 970 nm wavelength, and/or 1070 nm wavelength).

This invention, aimed at solving the issues, is to provide a transmissive resin composition for laser welding, demonstrating low light transmittance in a specific wavelength range, and high transmittance of light for laser welding; a formed article; a kit; a method for manufacturing a formed article; and, a car-borne camera.

### SOLUTION TO PROBLEM

The present inventors conducted research to address the above-mentioned problems, and as a result, the above problems are solved, by using a predetermined polyamide resin and by a light-transmissive coloring matter having a perylene skeleton as a light-transmissive coloring matter. Specifically, the problems described above are solved by the following means.
<1> A transmissive resin composition for laser welding comprising, per 100 parts by mass of a polyamide resin: 10 to 120 parts by mass of a reinforcing filler; and a light-transmissive coloring matter having a perylene skeleton, the polyamide resin including a diamine-derived structural unit and a dicarboxylic acid-derived structural unit, in which 70 mol% or more of the diamine-derived structural unit being derived from xylylenediamine, and 70 mol% or more of the dicarboxylic acid-derived structural unit being derived from straight chain aliphatic α,ω-dicarboxylic acid having 4 to 8 carbon atoms.
<2> The resin composition of <1>, further comprising at least one of copper iodide, potassium iodide and cerium oxide.
<3> The resin composition of <1> or <2>, wherein the xylylenediamine contains 50 to 90 mol% of metaxylylenediamine and 10 to 50 mol% of paraxylylenediamine.
<4> The resin composition of any of <1> to <3>, wherein the straight chain aliphatic α,ω-dicarboxylic acid having 4 to 8 carbon atoms contains adipic acid.
<5> The resin composition of <1> or <2>, wherein the xylylenediamine contains 50 to 90 mol% of metaxylylenediamine and 10 to 50 mol% of paraxylylenediamine, and, the straight chain aliphatic α,ω-dicarboxylic acid having 4 to 8 carbon atoms contains adipic acid.
<6> The resin composition of any of <1> to <5>, wherein a content of the light-transmissive coloring matter having a perylene skeleton, per 100 parts by mass of the polyamide resin, is 0.01 to 1.5 parts by mass.
<7> The resin composition of any of <1> to <5>, wherein a content of the light-transmissive coloring matter having a perylene skeleton, per 100 parts by mass of the polyamide resin, is 0.10 to 1.5 parts by mass.
<8> The resin composition of any of <1> to <5>, wherein a content of the light-transmissive coloring matter having a perylene skeleton, per 100 parts by mass of the polyamide resin, is 0.2 to 1.5 parts by mass.
<9> The resin composition of any of <1> to <8>, wherein content of the reinforcing filler, per 100 parts by mass of the polyamide resin, is 40 to 60 parts by mass.
<10> The resin composition of any of <1> to <9>, demonstrating, when formed into a test specimen of 1.0 mm thick, a light transmittance at 750 nm wavelength of 5% or smaller, and a light transmittance at 1070 nm wavelength of 20% or larger.
<11> The resin composition of any one of <1> to <10>, further comprising a metal phosphinate.
<12> The resin composition of <11>, demonstrating V-0 rating in the UL94 flammability test of the resin composition, at a thickness of 0.75 mm.
<13> The resin composition of <12>, demonstrating, when formed into a test specimen of 1.0 mm thick, a light transmittance at 400 nm wavelength of 1.0% or smaller, and a light transmittance at 940 nm wavelength of 3.0% or larger.
<14> The resin composition of any one of <1> to <12>, demonstrating, when formed into a test specimen of 1.0 mm thick, a light transmittance at 700 nm wavelength of 0.2% or smaller, and a light transmittance at 940 nm wavelength of 3.0% or larger.
<15> A formed article formed of the resin composition described in any one of <1> to <14>.
<16> A kit comprising:
   the resin composition described in any one of <1> to <14>; and
   a light-absorbing resin composition that contains a thermoplastic resin and a light-absorbing coloring matter.
<17> A method for manufacturing a formed article, the method comprising laser-welding a formed article formed of the resin composition described in any one of <1> to <14>, with a formed article formed of a light-absorbing resin composition that contains a thermoplastic resin and a light-absorbing coloring matter.
<18> A car-borne camera component formed of the resin composition described in any one of <1> to <14>, or formed with use of the kit described in <16>.
<19> A car-borne camera comprising the car-borne camera component described in <18>.

### ADVANTAGEOUS EFFECTS OF INVENTION

This invention, aimed at solving the issues, is to provide a transmissive resin composition for laser welding, demonstrating low light transmittance in a specific wavelength range; a formed article; a kit; a method for manufacturing a formed article; and, a car-borne camera.

### DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

Note that "parts by mass" in this patent specification denotes relative amount of component, and "% by mass" denotes absolute amount of component.

All measurement methods described in this patent specification, which would vary by year, are based on the standards as of January 1, 2020, unless otherwise specifically noted.

The transmissive resin composition for laser welding of this embodiment (may simply be referred to as "resin composition of this embodiment", hereinafter) specifically contains, per 100 parts by mass of a polyamide resin: 10 to 120 parts by mass of a reinforcing filler; and a light-transmissive coloring matter having a perylene skeleton, the polyamide resin including a diamine-derived structural unit and a dicarboxylic acid-derived structural unit, in which 70 mol% or more of the diamine-derived structural unit being derived from xylylenediamine, and 70 mol% or more of the dicarboxylic acid-derived structural unit being derived from straight chain aliphatic α,ω-dicarboxylic acid having 4 to 8 carbon atoms.

This structure enables provision of a resin composition that demonstrates low light transmittance in a specific wavelength range (for example, 700 to 800 nm wavelength, and/or, 400 to 500 nm wavelength), and, high light transmittance of light for laser welding (for example, beam at or around 970 nm wavelength, and/or, 1070 nm wavelength). In particular, obtainable is a resin composition that demonstrates high transmittance of light beam for laser welding, and low transmittance in the wavelength range shorter than the light beam for laser welding.

Although usual thermoplastic resin, when blended with a flame retardant, tends to lower the laser transmittance, the resin composition of this embodiment allows the light for laser welding to transmit therethrough to an extent enough for laser welding, and, can lower the transmittance in predetermined wavelength ranges, even if blended with a flame retardant.

That is, based on the finding that xylylenediamine-based polyamide resin, from among a number of polyamide resins, intrinsically demonstrates low light transmittance in short wavelength regions, particularly at 300 to 800 nm, and with use of a light-transmissive coloring matter having a perylene skeleton as the light-transmissive coloring matter, this embodiment succeeded in retaining the light transmittance of the light for laser welding (for example, beam of 900 to 1200 nm wavelength), while lowering the light transmittance in the wavelength range shorter than the light for laser welding (for example, light transmittance at 300 to 800 nm, more specifically at 700 to 800 nm wavelength, and/or, at 400 to 500 nm wavelength).

### <Polyamide Resin>

The resin composition of this embodiment contains, as the polyamide resin, a polyamide resin that includes a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from straight chain aliphatic α,ω-dicarboxylic acid having 4 to 8 carbon atoms. This sort of polyamide resin may be referred herein to as "xylylenediamine-based polyamide resin". With a choice of such xylylenediamine-based polyamide resin, the light transmittance of the light for laser welding (for example, beam of 900 to 1200 nm wavelength) may be presumably kept high, and the light transmittance in the wavelength range shorter than the light for laser welding (for example, light transmittance at 300 to 800 nm) may be presumably lowered. In addition, this makes full use of excellent performances including mechanical strength, inherent to the xylylenediamine-based polyamide resin.

In the xylylenediamine-based polyamide resin used in this embodiment, preferably 80 mol% or more of the diamine-derived structural unit is derived from xylylenediamine, wherein the proportion is more preferably 90 mol% or larger, even more preferably 95 mol% or larger, and yet more preferably 99 mol% or larger.

The xylylenediamine-derived structural unit is preferably metaxylylenediamine-derived structural unit and/or paraxylylenediamine-derived structural unit, more preferably contains 50 to 90 mol% of metaxylylenediamine and 10 to 50 mol% of paraxylylenediamine (without exceeding 100 mol% in total), and even more preferably contains 60 to 80 mol% of metaxylylenediamine and 20 to 40 mol% of paraxylylenediamine. In the xylylenediamine-based polyamide resin used in this embodiment, 95 mol% or more (preferably 99 mol% or more) of the xylylenediamine-derived structural unit is preferably metaxylylenediamine-derived structural unit and/or paraxylylenediamine-derived structural unit.

Diamine other than xylylenediamine, employable as a raw diamine component of the xylylenediamine-based polyamide resin, is exemplified by aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic ring-containing diamines such as bis(4-aminophenyl) ether, paraphenylenediamine, and bis(aminomethyl)naphthalene, all of which may be used singly, or in combination of two or more kinds.

In the xylylenediamine-based polyamide resin used in this embodiment, 70 mol% or more of the dicarboxylic acid-derived structural unit is derived from a straight-chain aliphatic α,ω-dicarboxylic acid having 4 to 8 carbon atoms, wherein the proportion is more preferably 75 mol% or more, even more preferably 85 mol% or more, yet more preferably 95 mol% or more, and furthermore preferably 99 mol% or more.

The straight-chain aliphatic α,ω-dicarboxylic acid having 4 to 8 carbon atoms is exemplified by succinic acid, glutaric acid, adipic acid, pimelic acid, and suberic acid. Among them, adipic acid is preferred. The straight-chain aliphatic α,ω-dicarboxylic acid having 4 to 8 carbon atoms may be used singly, or in combination of two or more kinds.

Dicarboxylic acid component other than the straight-chain aliphatic α,ω-dicarboxylic acid having 4 to 8 carbon atoms is exemplified by aliphatic dicarboxylic acid having 9 or more carbon atoms, such as sebacic acid; phthalic acid compounds such as isophthalic acid, terephthalic acid, and orthophthalic acid; and isomers of naphthalene dicarboxylic acid such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid, all of which may be used singly, or in combination of two or more kinds thereof.

In the xylylenediamine-based polyamide resin, xylylenediamine as a raw material preferably contains 50 to 90 mol% of metaxylylenediamine and 10 to 50 mol% of paraxylylenediamine, and, the straight-chain aliphatic α,ω-dicarboxylic acid having 4 to 8 carbon atoms preferably contains adipic acid. More preferably, 90 mol% or more of the raw diamine is attributed to xylylenediamine, meanwhile the xylylenediamine contains 60 to 80 mol% of metaxylylenediamine and 40 to 20 mol% of paraxylylenediamine, totaling 99 mol% or more, meanwhile 90 mol% or more of the straight-chain aliphatic α,ω-dicarboxylic acid is attributed to adipic acid.

Note that the xylylenediamine-based polyamide resin, although having the diamine-derived structural unit and the dicarboxylic acid-derived structural unit as the major components, does not completely exclude any structural unit other than them, and may of course contain any structural unit derived from lactams such as ε-caprolactam or laurolactam; or from aminocarboxylic acids such as aminocaproic acid, and aminoundecanoic acid. Now, the diamine-derived structural unit and the dicarboxylic acid-derived structural unit may be referred to as the major components, if the total number thereof accounts for the largest percentage of the all structural units that compose the xylylenediamine-based polyamide resin. In this embodiment, the total of the diamine-derived structural unit and the dicarboxylic acid-derived structural unit preferably accounts for 90% or more of all structural units in the xylylenediamine-based polyamide resin, and more preferably accounts for 95% or more.

The resin composition of this embodiment may contain other polyamide resin besides the xylylenediamine-based polyamide resin, but not necessarily. Such other polyamide resin is exemplified by aliphatic polyamide resin, and is preferably polyamide 6. With use of a polyamide resin such as polyamide 6, having a transmittance relatively higher than that of xylylenediamine-based polyamide resin, the wavelength selectivity may be presumably shifted towards the shorter wavelength.

The proportion of such other polyamide resin (preferably aliphatic polyamide resin, and more preferably polyamide 6), when contained in the resin composition of this embodiment, is preferably 1 part by mass or more per 100 parts by mass of the xylylenediamine-based polyamide resin, more preferably 2 parts by mass or more, meanwhile preferably 10 parts by mass or less, more preferably 5 parts by mass or less, and even more preferably 4 parts by mass or less.

The resin composition of this embodiment preferably contains 30% by mass or more, relative to the resin composition, of the polyamide resin, the content is more preferably 35% by mass or more, and even more preferably 40% by mass or more, and yet more preferably 45% by mass or more. Meanwhile, the upper limit of the content of the polyamide resin is preferably 80% by mass or below, and more preferably 75% by mass or below.

The resin composition of this embodiment may contain only one kind, or two or more kinds of the polyamide resin. When two or more kinds are contained, the total content preferably falls within the aforementioned ranges.

### <Reinforcing Filler>

The resin composition of this embodiment contains, per 100 parts by mass of the polyamide resin, 10 to 120 parts by mass of a reinforcing filler. With the aforementioned proportion of the reinforcing filler contained therein, the resin composition can achieve high mechanical strength. Note that the reinforcing filler in this embodiment is defined to exclude those that correspond to cerium oxide and nucleating agent.

The reinforcing filler which may be used and contained in the resin composition in this embodiment is a substance capable of improving, when blended with a resin, mechanical property of the obtainable resin composition, to which any of ordinary reinforcing materials for plastics is applicable. The reinforcing filler may be either organic substance or inorganic substance, wherein inorganic substance is preferred. The reinforcing filler preferably applicable herein include fibrous reinforcing filler such as glass fiber, carbon fiber, basalt fiber, wollastonite, and potassium titanate fiber. Also applicable are granular or shapeless filler composed of calcium carbonate, titanium oxide, feldspar mineral, clay, organized clay, and glass bead; and scaly reinforcing material such as glass flake, mica, and graphite. Among them, preferred is the fibrous filler, and particularly preferred is glass fiber, from the viewpoint of mechanical strength, rigidity and heat resistance. The glass fiber applicable herein may be any of those having either circular cross section or modified cross section.

The reinforcing filler applicable herein is preferably surface-treated with a surface modifier such as coupling agent. The glass fiber having the surface modifier adhered thereon is advantageous for its excellence in durability, moist-heat resistance, hydrolysis resistance, and heat shock resistance.

The glass fiber typically has a composition of A-glass, C-glass, E-glass, S-glass, R-glass, M-glass, D-glass, or boron free glass (glass with a boron content of 30 ppm by mass of less). E-glass (non-alkali glass) is particularly preferred.

The glass fiber means an article having a true circular or polygonal cross section when viewed perpendicularly to the longitudinal direction, and having a fiber-like appearance.

The glass fiber used for the resin composition of this embodiment may be a single yarn, or may be a twisted yarn made of a plurality of single yarns.

Product form of the glass fiber may be any of "glass roving" which is a roll on which a single yarn or twisted yarn made of a plurality of single yarns is continuously wound, "chopped strand" cut into 1 to 10 mm length, and "milled fiber" ground into 10 to 500 µm length. These sorts of glass fiber are marketed with the trade names of "Glasron Chopped Strand" and "Glasron Milled Fiber" from Asahi Fiber Glass Co., Ltd., which are readily available. Glass fibers with different morphologies may be used in a combined manner.

The glass fiber used in this embodiment has a cross section which may be circular or non-circular. With use of the glass fiber having a non-circular cross section, the obtainable formed article will be more effectively suppressed from warping. In this embodiment, even use of the glass fiber having a circular cross section can effectively suppress the warpage.

Content of the reinforcing filler in the resin composition of this embodiment, per 100 parts by mass of the polyamide resin, is preferably 10 parts by mass or more, more preferably 20 parts by mass or more, even more preferably 30 parts by mass or more, and yet more preferably 40 parts by mass or more. The upper limit value, per 100 parts by mass of the polyamide resin, is preferably 120 parts by mass or below, more preferably 110 parts by mass or below, and even may be 60 parts by mass or below.

The content of the reinforcing filler in the resin composition of this embodiment is preferably 20% by mass or more of the resin composition, and more preferably 25% by mass or more. The upper limit value is preferably 70% by mass or below, more preferably 65% by mass or below, even more preferably 60% by mass or below, and yet more preferably 55% by mass or below.

The resin composition of this embodiment may contain only one kind of reinforcing filler, or two or more kinds thereof. When two or more kinds are contained, the total content falls within the aforementioned ranges. Note that the content of reinforcing filler in this embodiment is understood to involve the amounts of sizing agent and surface modifier.

### <Light-Transmissive Coloring Matter Having Perylene Skeleton>

The resin composition of this embodiment contains the light-transmissive coloring matter having a perylene skeleton. With use of the light-transmissive coloring matter having a perylene skeleton, and, a predetermined xylylenediamine-based polyamide resin, obtainable is a resin composition that demonstrates high light transmittance of the light for laser welding (for example, beam of 900 to 1200 nm wavelength), and low light transmittance in the wavelength range shorter than the light for laser welding (for example, light transmittance at 300 to 800 nm).

The light-transmissive coloring matter used in this embodiment is typically black or dark purple coloring matter, which is preferably a coloring matter that looks black to human eyes. The light-transmissive coloring matter also includes a coloring matter that makes a blend demonstrate a light transmittance measured at 1070 nm wavelength of 20% or larger, when 0.2% by mass of such coloring matter (coloring matter presumed to be a light-transmissive coloring matter) is blended typically with polyamide resin (preferably polyamide resin, and 30% by mass of the glass fiber, totaling 100% by mass.

The light-transmissive coloring matter may be either dye or pigment. Pigment is preferred.

The coloring matter having a perylene skeleton is exemplified by Spectrasence (registered trademark) Black K0087 (former: Lumogen (registered trademark) Black FK4280), Spectrasence Black K0088 (former: Lumogen Black FK4281), all from BASF Colors & Effects Japan.

The resin composition of this embodiment contains, per 100 parts by mass of the polyamide resin, 0.01 parts by mass or more of the light-transmissive coloring matter having a perylene skeleton, the content is more preferably 0.04 parts by mass or more, more preferably 0.08 parts by mass or more, even more preferably 0.10 parts by mass or more, yet more preferably 0.15 parts by mass or more, furthermore preferably 0.18 parts by mass or more, and particularly preferably 0.20 parts by mass or more. Meanwhile, the resin composition of this embodiment contains, per 100 parts by mass of the polyamide resin, 1.5 part by mass or less of the light-transmissive coloring matter having a perylene skeleton, the content is more preferably 1.0 part by mass or less, and even more preferably 0.8 parts by mass or less. Depending on applications, the content may be 0.6 parts by mass or less, or may be 0.5 parts by mass or less, or even may be 0.45 parts by mass or less.

In this embodiment, the light-transmissive coloring matter having a perylene skeleton is also preferably blended so that the resin composition of this embodiment, when formed into a test specimen of 1.0 mm thick, will demonstrate a light transmittance at 750 nm wavelength of 5% or smaller, and a light transmittance at 1070 nm wavelength of 20% or larger.

In this embodiment, the light-transmissive coloring matter having a perylene skeleton is also preferably blended so that the resin composition of this embodiment, when formed into a test specimen of 1.0 mm thick, will demonstrate a light transmittance at 400 nm wavelength of 1.0% or smaller, and a light transmittance at 940 nm wavelength of 3.0% or larger.

In this embodiment, the light-transmissive coloring matter having a perylene skeleton is again also preferably blended so that the resin composition of this embodiment, when formed into a test specimen of 1.0 mm thick, will demonstrate a light transmittance at 700 nm wavelength of 1.0% or smaller, and a light transmittance at 940 nm wavelength of 3.0% or larger.

The resin composition of this embodiment may contain only one kind of, or two or more kinds of the light-transmissive coloring matter having a perylene skeleton. When two or more kinds are contained, the total content preferably falls within the aforementioned ranges.

In particular, the resin composition of this embodiment is advantageous, since use of the light-transmissive coloring matter having a perylene skeleton can achieve desired wavelength selectivity, without using two or more kinds of light-transmissive coloring matter.

The resin composition of this embodiment, although allowed to contain some other coloring matter besides the light-transmissive coloring matter having a perylene skeleton, preferably contains substantially no such other coloring matter. "Contains substantially no ..." typically means that the content of such other coloring matter is less than 1% by mass of the light-transmissive coloring matter having a perylene skeleton.

### <Copper Iodide, Potassium Iodide and Cerium Oxide>

The resin composition of this embodiment preferably contains at least one of copper iodide, potassium iodide or cerium oxide. With copper iodide contained therein, the obtainable formed article will tend to improve the heat resistance. Meanwhile, potassium iodide, when contained, becomes more likely to form a complex in the polyamide resin, and this tends to effectively suppress decomposition of the resin. Furthermore, cerium oxide, when contained, can effectively suppress hue change due to oxidation, and can effectively suppress color migration after wet heat test or hot water test. In short, blending of these components can achieve performances suited to applications.

Proportion of copper iodide in the resin composition of this embodiment is preferably 0.01 to 1% by mass of the resin composition, more preferably 0.02% by mass or larger, meanwhile preferably 0.5% by mass or smaller, and more preferably 0.3% by mass or smaller.

The resin composition of this embodiment may contain only one kind of, or two or more kinds of copper iodide. When two or more kinds are contained, the total content preferably falls within the aforementioned ranges.

Proportion of potassium iodide in the resin composition of this embodiment is preferably 0.01 to 2% by mass of the resin composition, more preferably 0.02% by mass or larger, meanwhile preferably 1% by mass or smaller.

Proportion of cerium oxide in the resin composition of this embodiment is preferably 0.01 to 2% by mass of the resin composition, more preferably 0.02% by mass or larger, meanwhile preferably 1% by mass or smaller.

The resin composition of this embodiment may contain only one kind, or two or more kinds of cerium oxide. When two or more kinds are contained, the total content preferably falls within the aforementioned ranges.

### <Mold Releasing Agent>

The resin composition of this embodiment may contain a mold releasing agent.

The mold releasing agent is typically exemplified by aliphatic carboxylic acid, aliphatic carboxylic acid salt, ester formed between aliphatic carboxylic acid and alcohol, aliphatic hydrocarbon compound having a number average molecular weight of 200 to 15,000, polysiloxane-based silicone oil, ketone wax, and light amide. Among them, preferred are aliphatic carboxylic acid, aliphatic carboxylic acid salt, and ester formed between aliphatic carboxylic acid and alcohol, and more preferred is aliphatic carboxylic acid salt.

Details of the mold releasing agent may be understood referring to the descriptions in paragraphs [0055] to [0061] of JP 2018-095706 A, the content of which is incorporated herein by reference.

The content of the mold releasing agent, when contained in the resin composition of this embodiment is preferably 0.05 to 3% by mass of the resin composition, more preferably 0.1 to 0.8% by mass, and even more preferably 0.2 to 0.6% by mass.

The resin composition of this embodiment may contain only one kind of, or two or more kinds of the mold releasing agent. When two or more kinds are contained, the total content preferably falls within the aforementioned ranges.

### <Nucleating Agent>

The resin composition of this embodiment may contain a nucleating agent.

The nucleating agent is not specifically limited, as far as it remains unmelt during melt working, and can act as a crystal nucleus in the cooling process. In particular, talc and calcium carbonate are preferred, and talc is more preferred.

The nucleating agent has the number-average particle size whose lower limit is preferably 0.1 µm or above, more preferably 1 µm or above, and even more preferably 3 µm or larger or above. The nucleating agent has the number-average particle size whose upper limit is preferably 40 µm or below, more preferably 30 µm or below, even more preferably 28 µm or below, yet more preferably 15 µm or below, and furthermore preferably 10 µm or below.

Ratio of the nucleating agent in the resin composition of this embodiment is preferably 0.01 to 1% by mass, more preferably 0.1% by mass or larger, and more preferably 0.5% by mass or smaller.

The resin composition of this embodiment may contain only one kind, or two or more kinds of the nucleating agent. When two or more kinds are contained, the total content preferably falls within the aforementioned ranges.

### <Flame Retardant>

The resin composition of this embodiment may contain a flame retardant. With the flame retardant contained therein, the resin composition will have improved flame retardance.

In this embodiment, the flame retardant is preferably a phosphorus-containing flame retardant, and more preferably metal phosphinate, dimetal phosphinate, phosphorus or phosphate salt, phosphate ester, phosphazene, or reaction product of melamine and phosphoric acid. The resin composition more preferably contains at least one of metal phosphinate or dimetal phosphinate, and even more preferably contains at least one kind of metal phosphinate.

The metal phosphinate may be effectively used typically for comparative tracking index (CTI), for its excellent tracking resistance.

Although usual thermoplastic resin, when blended with a flame retardant, tends to lower the light transmittance, use of the phosphorus-containing flame retardant (particularly, metal phosphinate) can effectively suppress the light transmittance of the resin composition from degrading. In particular, the metal phosphinate is more effective, since the substance is more likely to achieve high flame retardance only with a small amount of blending.

The metal phosphinate or dimetal phosphinate preferably contains at least one of a compound represented by formula (I) or a compound represented by formula (II). 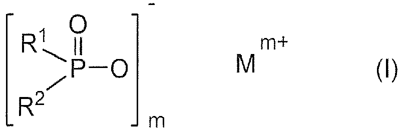 (In formula (I), each of R¹ and R² independently represents a straight-chain or branched-chain alkyl group having 1 to 6 carbon atoms, or an aryl group having 6 to 10 carbon atoms. M represents calcium ion, aluminum ion, magnesium ion, or zinc ion. m is a natural number that represents the valence of M.)

In formula (I), each of R¹ and R² independently represents a straight-chain or branched-chain alkyl group having 1 to 6 carbon atoms, or an aryl group having 6 to 10 carbon atoms, wherein methyl group, ethyl group, propyl group, or phenyl group is preferred. M represents calcium ion, aluminum ion, magnesium ion, or zinc ion. m is a natural number that represents the valence of M, and is preferably 2 or 3. 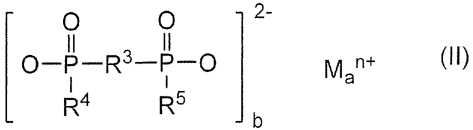 (In formula (II), each of R⁴ and R⁵ independently represents a straight-chain or branched-chain alkyl group having 1 to 6 carbon atoms, or an aryl group having 6 to 10 carbon atoms. R³ represents a straight-chain or branched-chain alkylene group having 1 to 10 carbon atoms, an arylene group having 6 to 10 carbon atoms, an alkylarylene group having 7 to 10 carbon atoms, or an arylalkylene group having 7 to 10 carbon atoms. M represents calcium ion, aluminum ion, magnesium ion, or zinc ion. n is a natural number that represents the valence of M. n, a and b are natural numbers that satisfy relation 2×b=n×a.)

In formula (II), each of R⁴ and R⁵ independently represents a straight-chain or branched-chain alkyl group having 1 to 6 carbon atoms, or an aryl group having 6 to 10 carbon atoms, wherein methyl group, ethyl group, propyl group, or phenyl group is preferred. R³ represents a straight-chain or branched-chain alkylene group having 1 to 10 carbon atoms, an arylene group having 6 to 10 carbon atoms, an alkylarylene group having 7 to 10 carbon atoms, or an arylalkylene group having 7 to 10 carbon atoms; wherein methylene group, ethylene group, propylene group, or phenylene group is preferred. M represents calcium ion, aluminum ion, magnesium ion, or zinc ion. n is a natural number that represents the valence of M. n, a and b are natural numbers that satisfy relation 2×b=n×a. n is preferably 2 or 3. b is preferably 1, 2 or 3, and more preferably 1 or 3. a is preferably 1 or 2.

The metal phosphinate or the dimetal phosphinate is specifically exemplified by a product produced in an aqueous medium by using phosphinic acid, together with metal carbonate, metal hydroxide or metal oxide. The metal phosphinate or the dimetal phosphinate, although basically being a monomeric compound, may occasionally be a polymeric metal phosphinate having a degree of condensation of 1 to 3, depending on reaction environments.

Phosphinic acid or diphosphinic acid is exemplified by dimethylphosphinic acid, ethyl methylphosphinic acid, diethylphosphinic acid, methyl n-propylphosphinic acid, methane di(methylphosphinic acid), benzene 1,4-di(methylphosphinic acid), methyl phenylphosphinic acid, and diphenylphosphinic acid.

The metal phosphinate is exemplified by calcium dimethylphosphinate, magnesium dimethylphosphinate, aluminum dimethylphosphinate, zinc dimethylphosphinate, calcium ethyl methylphosphinate, magnesium ethyl methylphosphinate, aluminum ethyl methylphosphinate, zinc ethyl methylphosphinate, calcium diethylphosphinate, magnesium diethylphosphinate, aluminum diethylphosphinate, zinc diethylphosphinate, calcium methyl n-propylphosphinate, magnesium methyl n-propylphosphinate, aluminum methyl n-propylphosphinate, zinc methyl n-propylphosphinate, calcium methyl phenylphosphinate, magnesium methyl phenylphosphinate, aluminum methyl phenylphosphinate, zinc methyl phenylphosphinate, calcium diphenylphosphinate, magnesium diphenylphosphinate, aluminum diphenylphosphinate, and zinc diphenylphosphinate.

The dimetal phosphinate is exemplified by calcium methane di(methylphosphinate), magnesium methane di(methylphosphinate), aluminum methane di(methylphosphinate), zinc methane di(methylphosphinate), calcium benzene 1,4-di(methylphosphinate), magnesium benzene 1,4-di(methylphosphinate), aluminum benzene 1,4-di(methylphosphinate), and zinc benzene 1,4-di(methylphosphinate).

Among the metal phosphinate or dimetal phosphinate, particularly preferred are aluminum ethyl methylphosphinate, aluminum diethylphosphinate, and zinc diethylphosphinate, from the viewpoint of flame retardance and electrical characteristics. Commercial products are available from Clariant AG, which are exemplified by Exolit OP 1230 (aluminum phosphinate) and Exolit OP 1400 (both are product names).

Content of the flame retardant (preferably metal phosphinate) in the resin composition of this embodiment is preferably 1% by mass or larger in the resin composition, more preferably 2% by mass or larger, even more preferably 2.5% by mass or larger, and yet more preferably 3% by mass or larger. The upper limit is preferably 25% by mass or below, and more preferably 20% by mass or below.

The resin composition of this embodiment may contain only one kind of, or two or more kinds of the flame retardant (preferably metal phosphinate) . When two or more kinds are contained, the total content preferably falls within the aforementioned ranges.

The resin composition of this embodiment, with the flame retardant contained therein, preferably demonstrate V-0 rating in the UL94 flammability test, when formed into a test specimen of 0.75 mm thick.

### <Anti-Dripping Agent>

The resin composition of this embodiment may contain an anti-dripping agent. With the anti-dripping agent blended together with the flame retardant into the resin composition of this embodiment, the obtainable formed article will have further improved flame retardance.

The anti-dripping agent is exemplified by fluoroolefin resin. The fluoroolefin resin is usually a polymer or copolymer that contains a fluoroethylene structure. Specific examples include difluoroethylene resin, tetrafluoroethylene resin, tetrafluoroethylene/hexafluoropropylene copolymer resin, and tetrafluoroethylene/perfluoroalkyl vinyl ether copolymer resin. Among them, tetrafluoroethylene resin or the like is preferred. The fluoroethylene resin is exemplified by those having fibril-forming ability.

Detail of the anti-dripping agent may be understood referring to the description in paragraphs [0066] to [0071] of JP-2013-082786 A, the content of which is incorporated herein by reference.

Content of the anti-dripping agent, when blended in the resin composition of this embodiment, is preferably 0.001 parts by mass or more per 100 parts by mass of the polyamide resin, more preferably 0.01 parts by mass or more, even more preferably 0.05 parts by mass or more, and yet more preferably 0.1 parts by mass or more. The upper limit value of the content is preferably 1.0 part by mass or below, more preferably 0.75 parts by mass or below, and even more preferably 0.5 parts by mass or below. At or above the lower limit value, the flame retardance will be more effectively demonstrated, meanwhile at or below the upper limit value, the obtainable formed article will have further improved outer appearance or mechanical strength.

The resin composition of this embodiment may contain only one kind of, or two or more kinds of anti-dripping agent. When two or more kinds are contained, the total content preferably falls within the aforementioned ranges.

### <Other Components>

The resin composition of this embodiment may contain other components, without departing from the spirit of this embodiment. Such additive is exemplified by light stabilizer, antioxidant, UV absorber, fluorescent brightener, anti-static agent, anti-clouding agent, anti-blocking agent, flow modifier, plasticizer, dispersion aid, and antibacterial agent. The resin composition of this embodiment may also contain copper compound other than copper iodide, alkali metal halide other than potassium iodide, and so forth. These components may be used singly, or in combination of two or more kinds.

The resin composition of this embodiment contains the xylylenediamine-based polyamide resin, the reinforcing filler, the light-transmissive coloring matter having a perylene skeleton, and other additives, while adjusting the total contents of the individual components to 100% by mass. This embodiment is exemplified by a case where the xylylenediamine-based polyamide resin, the reinforcing filler, the light-transmissive coloring matter having a perylene skeleton, at least one of copper iodide, potassium iodide or cerium oxide, the nucleating agent, and the mold releasing agent will add up to 99% by mass or more of the resin composition.

This embodiment is exemplified by a case where the xylylenediamine-based polyamide resin, polyamide 6, the reinforcing filler, the light-transmissive coloring matter having a perylene skeleton, at least one of copper iodide, potassium iodide or cerium oxide, the nucleating agent, and the mold releasing agent will add up to 99% by mass or more of the resin composition.

### <Physical Property of Resin Composition>

One example of the wavelength selectivity of the resin composition of this embodiment requires that the light transmittance at 700 to 800 nm wavelength is low, and, that the light transmittance at or around 1070 nm wavelength is high. For example, the resin composition of this embodiment, when formed into a test specimen of 1.0 mm thick, preferably demonstrate a light transmittance at 750 nm wavelength of 5% or smaller (preferably 0 to 3%, more preferably 0 to 2%, even more preferably 0 to 1%, and yet more preferably 0 to 0.5%), and preferably demonstrates a light transmittance at 1070 nm wavelength of 20% or larger. With the light transmittance at 1070 nm wavelength kept at 20% or larger, the laser welding will be feasible enough. The light transmittance of the test specimen of 1.0 mm thick at 1070 nm wavelength is preferably 25% or larger, more preferably 30% or larger, and even more preferably 35% or larger. The upper limit of the light transmittance of the test specimen of 1.0 mm thick at 1070 nm wavelength is typically 90% or below, and may even be 70% or below. In particular, for an application in which the laser-welded formed article is desired to be poorly light-transmissive, the upper limit of the light transmittance at 1070 nm wavelength is preferably 50% or below.

Another example of the wavelength selectivity of the resin composition of this embodiment requires that the light transmittance at 300 to 500 nm is low, and, the light transmittance at or around 970 nm wavelength is high. For example, the resin composition of this embodiment, when formed into a test specimen of 1.0 mm thick, preferably demonstrate a light transmittance at 400 nm wavelength of 1.0% or smaller (preferably 0.2% or smaller, and, typically 0% or larger), and preferably demonstrates a light transmittance at 940 nm wavelength of 3.0% or larger (preferably 5.0% or larger, and typically 30% or smaller) . The wavelength selectivity of this embodiment may be achieved typically by blending, as a part of the polyamide resin component, a polyamide resin (for example, polyamide 6) having a transmittance relatively higher than that of the xylylenediamine-based polyamide resin.

Still another example of the resin composition of this embodiment requires that the light transmittance at 700 nm is low, and, the light transmittance at 970 nm wavelength is high. For example, the resin composition of this embodiment, when formed into a test specimen of 1.0 mm thick, preferably demonstrate a light transmittance at 700 nm wavelength of 1.0% or smaller (preferably 0.2% or smaller, and, typically 0% or larger), and preferably demonstrates the light transmittance at 940 nm wavelength of 3.0% or larger (preferably 5.0% or larger, and, typically 30% or smaller). The wavelength selectivity of this embodiment may be achieved by controlling the content of the light-transmissive coloring matter having a perylene skeleton, per 100 parts by mass of the polyamide resin, to 0.2 to 1.5 parts by mass.

The light transmittance may be measured according to the description in EXAMPLES described later.

### <Method for Producing Resin Composition>

A method for producing the resin composition of this embodiment, although not specifically limited, preferably uses a single-screw or twin-screw extruder as a kneader, devised to enable degassing through a vent port. The polyamide resin component, the reinforcing filler, the light-transmissive coloring matter, and other optional additives may be fed to the kneader *en bloc;* or such other components to be blended may be sequentially fed, after the polyamide resin component was fed. The reinforcing filler is preferably fed at the middle of the kneader, in order to avoid fracture during kneading. Alternatively, two or more kinds of component selected from the individual components may be pre-mixed or kneaded.

In this embodiment, the light-transmissive coloring matter may be preliminarily mixed typically with the polyamide resin to prepare a masterbatch, and then further kneaded with other components (polyamide resin component, the reinforcing filler, the light-transmissive coloring matter, etc.) to prepare the resin composition of this embodiment.

The method for manufacturing a formed article with use of the resin composition of this embodiment is not specifically limited, to which any of known forming methods having been applied to thermoplastic resin are applicable, from among injection molding, hollow molding, extrusion molding, press forming and so forth. A particularly preferred forming method in this case is injection molding, in consideration of good fluidity. In the injection molding, cylinder temperature is preferably controlled to 250 to 300°C.

### <Kit>

The resin composition of this embodiment, and the light-absorptive resin composition that contains a thermoplastic resin and a light-absorptive coloring matter, are preferably used for a kit, particularly for a kit for manufacturing a formed article by laser welding.

That is, the resin composition contained in the kit plays a role of the light-transmitting resin composition, and a formed article formed of the light-transmitting resin composition serves as a transmissive resin member through which the laser light in laser welding can transmit. On the other hand, a formed article formed of the light-absorptive resin composition serves as an absorptive resin member that absorbs the laser light in laser welding.

### <<Light-Absorptive Resin Compositions

The light-absorptive resin composition used in this embodiment contains a thermoplastic resin and a light-absorptive coloring matter. Also other components such as reinforcing filler may be contained.

The thermoplastic resin is exemplified by polyamide resin, olefinic resin, vinyl-based resin, styrene-based resins, acrylic resin, polyphenylene ether-based resin, polyester resin, polycarbonate resin, and polyacetal resin. Particularly preferred are polyamide resin, polyester resin, and polycarbonate resin, from the viewpoint of good compatibility with the light-transmissive resin composition (resin composition of this embodiment), and more preferred is polyamide resin. The thermoplastic resin may be of single kind, or two or more kinds.

The polyamide resin used for the light-absorptive resin composition is preferably the aforementioned xylylenediamine-based polyamide resin, although the type of which is not specifically limited.

The reinforcing filler is exemplified by those capable of absorbing laser light, such as glass fiber, carbon fiber, silica, alumina, carbon black, and inorganic powder coated with a laser-absorptive material. Glass fiber is preferred. The glass fiber is synonymous to the glass fiber which may be blended with the aforementioned resin composition of this embodiment. Content of the reinforcing filler is preferably 20 to 70% by mass, more preferably 25 to 60% by mass, and even more preferably 30 to 55% by mass.

The light-absorptive coloring matter includes coloring matters that demonstrate absorption in the wavelength range of the laser to be irradiated, which is typically within the wavelength range from 800 nm to 1100 nm in this embodiment, and particularly within the wavelength range from 900 to 1100 nm. The light-absorptive coloring matter also includes coloring matter that makes the resin composition demonstrate a light transmittance of smaller than 30% in the aforementioned range, and further 10% or smaller, typically when 0.3 parts by mass of such coloring matter is blended per 100 parts by mass of the xylylenediamine-based polyamide resin, and measured by a method described later in EXAMPLES.

The light-absorptive coloring matter is specifically exemplified by inorganic pigments [black pigment such as carbon black (acetylene black, lamp black, thermal black, furnace black, channel black, Ketjen black, etc.), red pigment such as red iron oxide, orange pigment such as molybdate orange, and white pigment such as titanium oxide]; and organic pigment (yellow pigment, orange pigment, red pigment, blue pigment, green pigment, etc.). Among them, the inorganic pigment is preferred for its generally high concealability, the black pigment is more preferred, and carbon black is even more preferred. Two or more kinds of these light-absorptive coloring matters may be combined for use. The content of the light-absorptive coloring matter is preferably 0.01 to 30 parts by mass, per 100 parts by mass of the xylylenediamine-based polyamide resin.

In the kit of this embodiment, the component of the resin composition excluding the light-transmissive coloring matter and the reinforcing filler, and the component of the light-absorptive resin composition excluding the light-absorptive coloring matter and the reinforcing filler, are preferably commonalized up to a degree of 80% by mass or more, which is more preferably 90% by mass or more, and even more preferably 95 to 100% by mass.

### <<Laser Welding Method>>

Next, a laser welding method will be explained. In this embodiment, a formed article (laser-welded article) may be manufactured by laser-welding the formed article formed of the resin composition of this embodiment (transmissive resin member), and the formed article formed of the light-absorptive resin composition (absorptive resin member). Laser welding can tightly weld the transmissive resin member and the absorptive resin member, without using an adhesive.

Shape of the members, although not specifically limited, usually has at least a surface-contact part (flat or curved), since the members are used in a joined form as a result of laser welding. In the laser welding, the laser light transmitted through the transmissive resin member is absorbed by the absorptive resin member, causing melting and welding of both members. The formed article formed of the resin composition of this embodiment, having high transmittance of laser light, is suitably used as the transmissive resin member. Thickness of the member through which the laser light transmits (thickness of a part through which the laser light transmits, measured in the direction of transmission of the laser light) may be suitably determined, considering application, chemical composition of the resin composition and so forth, which is typically 5 mm or smaller, and preferably 4 mm or smaller.

A laser light source used for laser welding may be determined depending on absorption wavelength of the light-absorptive coloring matter, wherein the laser light of 900 to 1100 nm wavelength is preferred, and to which semiconductor laser or fiber laser is applicable.

More specifically, in an exemplary case where the transmissive resin member and the absorptive resin member are welded, first, the welding sites of both members are brought into contact. The welding sites herein are preferably kept in surface contact between flat faces, curved faces, or combination of flat and curved faces. Next, the laser light is irradiated through the transmissive resin member. The laser light herein may be optionally condensed through a lens, on the interface between both members. The condensed beam transmits through the transmissive resin member, absorbed at around the surface of the absorptive resin member, generates heat, and melts the resin. The heat is then conducted by thermal conduction also to the transmissive resin member to melt it, to form a molten pool at the interface between both members. Both member are welded after cooled.

The formed article, composed of the transmissive resin member and the absorptive resin member thus welded, has high weld strength. Note that the formed article in the context of this embodiment encompasses not only finished product or parts, but also members that compose a part of them.

The formed article obtained by laser welding in this embodiment excels in mechanical strength and weld strength, and causes less damage on the resin even after laser irradiation, and is therefore applicable to various purposes, such as a variety of storage containers, electrical/electronic equipment, office automation (OA) equipment, home electric appliances, machine and mechanism parts, and vehicle mechanism parts. In particular, the formed article is suitable for food container, drug container, oil and fat products container, vehicle hollow parts (various tanks, intake manifold part, camera body, etc.), vehicle electrical parts (various control units, ignition coil part, etc.), motor part, various sensor parts, connector part, switch part, circuit breaker part, relay part, coil part, transformer part, lamp part, and so forth. The resin composition and the kit of this embodiment are particularly suitable for vehicle hollow parts such as car-borne camera body.

### EXAMPLES

This invention will further be detailed referring to Examples. All materials, amounts of consumption, ratios, process details and procedures described in Examples below may suitably be modified, without departing from the spirit of this invention. Hence, the scope of this invention is by no means limited to specific Examples below.

In a case where any measuring instrument used in EXAMPLES become unavailable typically due to discontinuation, the measurement may be conducted with use of other instrument having equivalent performances.

### <Polyamide Resin>

MP6: Metaxylylenediamine/paraxylylenediamine (M/P) mole ratio = 7:3, synthesized according to Exemplary Synthesis below.

### <<Exemplary Synthesis of MP6 (MP mole ratio = 7:3)>>

Adipic acid was melted under heating in a reaction can with a nitrogen atmosphere, the content was kept stirred, to which a mixed diamine having a mole ratio of paraxylylenediamine (from Mitsubishi Gas Chemical Company) and metaxylylenediamine (from Mitsubishi Gas Chemical Company) of 3:7 was slowly added dropwise under pressure (0.35 MPa), so as to adjust the mole ratio of diamine and adipic acid to approximately 1:1, the temperature was then elevated up to 270°C. Upon completion of the dropwise addition, the pressure was lowered down to 0.06 mPa, and the reaction was continued for 10 minutes to control the content of components having a molecular weight of 1,000 or smaller. The content was then taken out in the form of strands, pelletized with a pelletizer, to obtain polyamide resin (MP6).

MP10: MP mole ratio = 7:3, synthesized according to Exemplary Synthesis below.

### <<Exemplary Synthesis of MP10 (MP mole ratio = 7:3)>>

Sebacic acid was melted under heating in a reaction can with a nitrogen atmosphere, the content was kept stirred, to which a mixed diamine having a mole ratio of paraxylylenediamine (from Mitsubishi Gas Chemical Company) and metaxylylenediamine (from Mitsubishi Gas Chemical Company) of 3:7 was slowly added dropwise under pressure (0.35 MPa), so as to adjust the mole ratio of diamine and sebacic acid to approximately 1:1, the temperature was then elevated up to 235°C. Upon completion of the dropwise addition, the reaction was continued for 60 minutes to control the content of components having a molecular weight of 1,000 or smaller. Upon completion of the reaction, the content was taken out in the form of strands, pelletized with a pelletizer, to obtain polyamide resin (MP10).
PA66: Polyamide 66, Invista U4800, from Invista Nylon Polymers Co.
PA6: Polyamide 6, 1013B, from UBE Corporation

### <Nucleating Agent>

Talc: Micron White #5000S, from Hayashi Kasei Co., Ltd.

### <Flame Retardant>

OP1230: Metal phosphinate, from Clariant AG

### <Anti-Dripping Agent>

FA-500H: Polyflon, from Daikin Industries, Ltd.

### <Copper Iodide (CuI)>

Copper(I) iodide, from Nihon Kagaku Sangyo Co., Ltd.

### <Potassium Iodide>

Product from FUJIFILM Wako Pure Chemical Corporation

### <Zinc(II) Stearate>

Product from FUJIFILM Wako Pure Chemical Corporation

### <Cerium oxide>

Cerium Hydrate 90, Treibacher Indutrie AG

### <Reinforcing Filler>

ECS03T-211H: E-glass fiber, from Nippon Electric Glass Co., Ltd., weight-average fiber diameter = 10.5 um, cut length = 3.5 mm
ECS03T-275H: E-glass fiber, from Nippon Electric Glass Co., Ltd., weight-average fiber diameter = 10.5 um, cut length = 3.5 mm

### <Mold Releasing Agent>

CS8CP: Montanate soap, from Nitto Chemical Industry Co., Ltd.
WH-255: Light Amide, from Kyoeisha Chemical Co., Ltd.

### <Light-Transmissive Coloring Matter>

Spectrasence Black K 0088: Perylene pigment Spectrasence Black K 0088 (former Lumogen Black K 0088, former Lumogen Black FK 4281), from BASF Colors & Effects Japan

### Examples 1 to 12, Comparative Examples 1 to 3

### <Compound>

The individual components, but excluding the glass fiber, were precisely weighed and dry-blended according to the ratio summarized in Table 1 described later (denoted in parts by mass in Table 1), and the blend was fed from the base of screws of a twin-screw extruder (TEM26SS, from Shibaura Machine Co., Ltd. (former Toshiba Machine Co., Ltd.)) by using a twin-screw cassette weighing feeder (CE-W-1-MP, from Kubota Corporation). Meanwhile, the glass fiber was fed by using a vibrating cassette weighing feeder (CE-V-1B-MP, from Kubota Corporation), from the lateral side of the aforementioned twin-screw extruder, then melt-kneaded with the resin component and so forth, to obtain a resin composition pellet. Temperature of the extruder was preset to 260°C for a case where MP10 was used as the polyamide resin, set to 280°C for MP6, and set to 280°C for PA66.

### <Flexural Strength and Flexural Modulus>

Each of the thus obtained resin pellets obtained by the aforementioned method for production was dried at 120°C for 4 hours, and then injection-molded with use of NEX140III from Nissei Plastic Industrial Co., Ltd., to produce an ISO tensile test specimen of 4 mm thick. In the molding, the cylinder temperature was set to 260°C for a case where MP10 was used as the polyamide resin, set to 280°C for MP6, and set to 280°C for PA66; meanwhile, the die temperature was set to 110°C for a case where MP10 was used as the polyamide resin, set to 130°C for MP6, and set to 90°C for PA66.

With use of the ISO tensile test specimen (4 mm thick), flexural strength (in MPa) and flexural modulus (in MPa) were measured at 23°C, in compliance with ISO 178.

### <Light Transmittance>

Each of the thus obtained resin composition pellets was dried at 120°C for 4 hours, and then injection-molded with use of an injection molding machine (SE-50D, from Sumitomo Heavy Industries, Ltd.), to manufacture a test specimen (60 mm × 60 mm × 1.0 mm thick) for measurement of light transmittance. The cylinder temperature and the die temperature were set equal to those for the ISO tensile test specimen.

The light transmittance (in %) was measured with use of a visible-UV spectrophotometer (UV-3100PC, from Shimadzu Corporation), at each wavelength as summarized in Table 1 and Table 2.

**[Table 1]**

| Raw material | | Example 1 | Example 2 | Example 3 | Example 4 | Example 5 | Example 6 | Example 7 | Example 8 |
|---|---|---|---|---|---|---|---|---|---|
| MP6 | | 68.9 | 48.9 | 69.05 | 49.05 | 68.9 | 48.9 | 69.05 | 49.05 |
| MP10 | | | | | | | | | |
| PA66 | Invista U4800 | | | | | | | | |
| Talc | #5000S | 0.3 | 0.3 | 0.3 | 0.3 | 0.3 | 0.3 | 0.3 | 0.3 |
| Copper(I) iodide | CUI | 0.075 | 0.075 | 0.075 | 0.075 | | | | |
| Potassium iodide | KI | 0.2 | 0.2 | 0.2 | 0.2 | | | | |
| Zinc(II) stearate | [CH₃(CH₂)₁₆COO]₂Zn | 0.025 | 0.025 | 0.025 | 0.025 | | | | |
| Cerium oxide | Cerium Hydrate 90 | | | | | 0.3 | 0.3 | 0.3 | 0.3 |
| Mold releasing agent | CS8CP | 0.3 | 0.3 | 0.3 | 0.3 | 0.3 | 0.3 | 0.3 | 0.3 |
| Light-transmissive coloring matter | Spectrasence Black K0088 | 0.2 | 0.2 | 0.05 | 0.05 | 0.2 | 0.2 | 0.05 | 0.05 |
| Reinforcing filler | ECS03T-211H | 30 | 50 | 30 | 50 | 30 | 50 | 30 | 50 |
| Flexural strength (MPa) | | 313 | 423 | | | | | | |
| Flexural modulus (MPa) | | 11539 | 19248 | | | | | | |
| Light transmissivity (%) | 700 (nm) | 0 | 0 | 1 | 1 | 0 | 0 | 1 | 1 |
| | 750 (nm) | 0 | 0 | 2 | 2 | 0 | 0 | 3 | 3 |
| | 800 (nm) | 0 | 0 | 4 | 4 | 0 | 0 | 5 | 5 |
| | 1070 (nm) | 37 | 39 | 42 | 44 | 40 | 42 | 45 | 47 |

**[Table 2]**

| Raw material | | Example 9 | Example 10 | Example 11 | Example 12 | Comparative Example 1 | Comparative Example 2 | Comparative Example 3 |
|---|---|---|---|---|---|---|---|---|
| MP6 | | 69.3 | 68.7 | 49.3 | 48.7 | | | |
| MP10 | | | | | | 69.05 | 49.05 | |
| PA66 | Invista U4800 | | | | | | | 69.05 |
| Talc | #5000S | 0.3 | 0.3 | 0.3 | 0.3 | 0.3 | 0.3 | 0.3 |
| Copper(I) iodide | CUI | 0.075 | 0.075 | 0.075 | 0.075 | 0.075 | 0.075 | 0.075 |
| Potassium iodide | KI | 0.2 | 0.2 | 0.2 | 0.2 | 0.2 | 0.2 | 0.2 |
| Zinc(II) stearate | [CH₃(CH₂)₁₆COO]₂Zn | 0.025 | 0.025 | 0.025 | 0.025 | 0.025 | 0.025 | 0.025 |
| Cerium oxide | Cerium Hydrate 90 | | | | | | | |
| Mold releasing agent | CS8CP | | | | | 0.3 | 0.3 | 0.3 |
| Light-transmissive coloring matter | Spectrasence Black K0088 | 0.1 | 0.7 | 0.1 | 0.7 | 0.05 | 0.05 | 0.05 |
| Reinforcing filler | ECS03T-211H | 30 | 30 | 50 | 50 | 30 | 50 | 30 |
| Flexural strength (MPa) | | 311 | 316 | 432 | 428 | | | |
| Flexural modulus (MPa) | | 12133 | 12186 | 20268 | 20168 | | | |
| Light transmissivity (%) | 700 (nm) | 0 | 0 | 0 | 0 | 7 | 3 | 3 |
| | 750 (nm) | 1 | 0 | 0 | 0 | 11 | 6 | 7 |
| | 800 (nm) | 1 | 0 | 1 | 0 | 16 | 10 | 12 |
| | 1070 (nm) | 44 | 30 | 47 | 35 | 66 | 66 | 60 |

As is clear from the results above, the resin compositions of Examples 1 to 12 were found to demonstrate high light transmittance at 1070 nm wavelength, and, low light transmittance at 700 to 800 nm wavelength. Also the mechanical strength was found to kept high. In contrast, the cases where MP10 or PA66 was used as the polyamide resin (Comparative Examples 1 to 3) were found to demonstrate high light transmittance at 700 to 800 nm wavelength.

A pellet for forming the absorptive resin member was obtained in the same way as in Example 1, except that the light-transmissive coloring matter was not blended to the resin composition, and instead 3 parts by mass Carbon Black #45 from Mitsubishi Chemical Corporation was blended. The pellet obtained in Example 1 and the pellet for forming absorptive resin member were then laser-welded according to the description in paragraphs [0072] and [0073], and in Fig. 1 of JP-2018-168346 A. Proper laser welding was confirmed.

### Examples 13 to 17, Comparative Examples 4, 5

### <Compound>

The individual components, but excluding the glass fiber, were precisely weighed and dry-blended according to the composition summarized in Table 3 below (the individual components in Table 3 are given in parts by mass), and the blend was fed from the base of screws of a twin-screw extruder (TEM26SS, from Shibaura Machine Co., Ltd.) by using a twin-screw cassette weighing feeder (CE-W-1-MP, from Kubota Corporation). Meanwhile, the glass fiber was fed by using a vibrating cassette weighing feeder (CE-V-1B-MP, from Kubota Corporation), from the lateral side of the aforementioned twin-screw extruder, then melt-kneaded with the resin component and so forth, to obtain a resin composition pellet. Temperature of the extruder was preset to 280°C. Die temperature was set to 110°C.

### <Light Transmittance>

Each of the thus obtained resin composition pellets was dried at 120°C for 4 hours, and then injection-molded with use of an injection molding machine (SE-50D, from Sumitomo Heavy Industries, Ltd., to manufacture a test specimen (60 mm × 60 mm × 1.0 mm thick) for measurement of light transmittance. The cylinder temperature and the die temperature were set to 280°C, and die temperature was set to 110°C.

The light transmittance (in %) was measured with use of a visible-UV spectrophotometer (UV-3100PC, from Shimadzu Corporation), at each wavelength as summarized in Table 3.

### <Judgment of UL94 Flammability Test>

Each of the thus obtained pellets was injection-molded with use of an injection molding machine ("EC160", from Shibaura Machine Co., Ltd.) at a cylinder temperature of 280°C and at a die temperature of 110°C, to obtain test specimens of 0.75 mm thick and 1.50 mm thick. The thus obtained test specimens were evaluated by the UL94 flammability test. "Failed" means that the result applied to none of V-0, V-1 and V-2. Results are summarized in Table 3.

**[Table 3]**

| Raw material | | Example 13 | Example 14 | Example 15 | Example 16 | Example 17 | Comparative Example 4 | Comparative Example 5 |
|---|---|---|---|---|---|---|---|---|
| Polyamide resin | MP6 | 100 | 100 | 100 | 100 | 100 | | |
| | PA66 | | | | | | 100 | 100 |
| | PA6 | 3.5 | 3.5 | 3.84 | 3.5 | 3.84 | 3.48 | 3.84 |
| Reinforcing filler | T-275H | 52.5 | 52.5 | 57.6 | 52.5 | 57.6 | 52.2 | 57.6 |
| Nucleating agent | #5000S | 0.5 | 0.5 | 0.6 | 0.5 | 0.6 | 0.5 | 0.6 |
| Flame retardant | OP1230 | 17.5 | 17.5 | 28.8 | 17.5 | 28.8 | 17.4 | 28.8 |
| Anti-dripping agent | FA-500H | 0 | 0.35 | 0 | 0 | 0 | 0 | 0 |
| Mold releasing agent | WH-255 | 0.53 | 0.53 | 0.58 | 0.53 | 0.58 | 0.52 | 0.58 |
| Light-transmissive coloring matter | Spectrasence Black K0088 | 0.09 | 0.09 | 0.10 | 0.35 | 0.38 | 0.09 | 0.10 |
| Wavelength (nm) 1 mm thick transmittance (%) | 300 nm | 0 | 0 | 0 | 0 | 0 | 0 | 0 |
| | 400 nm | 0 | 0 | 0 | 0 | 0 | 2.1 | 1.3 |
| | 500 nm | 0 | 0 | 0 | 0 | 0 | 0.8 | 0.4 |
| | 600 nm | 0 | 0 | 0 | 0 | 0 | 1.5 | 0.8 |
| | 700 nm | 0.7 | 0.3 | 0.4 | 0 | 0 | 3 | 1.8 |
| | 750 nm | 1.5 | 0.7 | 1 | 0 | 0 | 5.2 | 3.4 |
| | 940 nm | 22.7 | 19.6 | 19.6 | 8.3 | 6.4 | 35.6 | 30.5 |
| UL94 Flammability | 0.75 mm thick | V-0 | V-0 | V-0 | V-0 | V-0 | V-2 | V-1 |
| | 1.50 mm thick | V-0 | V-0 | V-0 | V-0 | V-0 | Failed | V-0 |

As is clear from the results above, the resin compositions in Examples 13 to 17 were found to demonstrate high light transmittance at 970 nm wavelength, and, low light transmittance at 300 nm to 500 nm wavelength (further at 300 nm to 600 nm, and particularly at 300 nm to 700 nm). These resin compositions also demonstrated high flame retardance. In contrast, the cases where PA66 was used as the polyamide resin (Comparative Examples 4, 5) were found to demonstrate high light transmittance at 400 to 750 nm wavelength, and also found to fail in achieving the flame retardance.

A pellet for forming absorptive resin member was obtained in the same way as in Example 13, except that the light-transmissive coloring matter was not blended to the resin composition, and instead 3 parts by mass Carbon Black #45 from Mitsubishi Chemical Corporation was blended. The pellet obtained in Example 1 and the pellet for forming absorptive resin member were then laser-welded according to the description in paragraphs [0072] and [0073], and in Fig. 1 of JP-2018-168346 A. Proper laser welding was confirmed.

## Claims

1. A transmissive resin composition for laser welding comprising, per 100 parts by mass of a polyamide resin:
10 to 120 parts by mass of a reinforcing filler; and
a light-transmissive coloring matter having a perylene skeleton,
the polyamide resin including a diamine-derived structural unit and a dicarboxylic acid-derived structural unit, in which 70 mol% or more of the diamine-derived structural unit being derived from xylylenediamine, and 70 mol% or more of the dicarboxylic acid-derived structural unit being derived from straight chain aliphatic α,ω-dicarboxylic acid having 4 to 8 carbon atoms.

2. The resin composition of claim 1, further comprising at least one of copper iodide, potassium iodide and cerium oxide.

3. The resin composition of claim 1 or 2, wherein the xylylenediamine contains 50 to 90 mol% of metaxylylenediamine and 10 to 50 mol% of paraxylylenediamine.

4. The resin composition of any of claims 1 to 3, wherein the straight chain aliphatic α,ω-dicarboxylic acid having 4 to 8 carbon atoms contains adipic acid.

5. The resin composition of claim 1 or 2, wherein the xylylenediamine contains 50 to 90 mol% of metaxylylenediamine and 10 to 50 mol% of paraxylylenediamine, and, the straight chain aliphatic α,ω-dicarboxylic acid having 4 to 8 carbon atoms contains adipic acid.

6. The resin composition of any of claims 1 to 5, wherein a content of the light-transmissive coloring matter having a perylene skeleton, per 100 parts by mass of the polyamide resin, is 0.01 to 1.5 parts by mass.

7. The resin composition of any of claims 1 to 5, wherein a content of the light-transmissive coloring matter having a perylene skeleton, per 100 parts by mass of the polyamide resin, is 0.10 to 1.5 parts by mass.

8. The resin composition of any of claims 1 to 5, wherein a content of the light-transmissive coloring matter having a perylene skeleton, per 100 parts by mass of the polyamide resin, is 0.2 to 1.5 parts by mass.

9. The resin composition of any of claims 1 to 8, wherein a content of the reinforcing filler, per 100 parts by mass of the polyamide resin, is 40 to 60 parts by mass.

10. The resin composition of any of claims 1 to 9, demonstrating, when formed into a test specimen of 1.0 mm thick, a light transmittance at 750 nm wavelength of 5% or smaller, and a light transmittance at 1070 nm wavelength of 20% or larger.

11. The resin composition of any one of claims 1 to 10, further comprising a metal phosphinate.

12. The resin composition of claim 11, demonstrating V-0 rating in the UL94 flammability test of the resin composition, at a thickness of 0.75 mm.

13. The resin composition of claim 12, demonstrating, when formed into a test specimen of 1.0 mm thick, a light transmittance at 400 nm wavelength of 1.0% or smaller, and a light transmittance at 940 nm wavelength of 3.0% or larger.

14. The resin composition of any one of claims 1 to 12, demonstrating, when formed into a test specimen of 1.0 mm thick, a light transmittance at 700 nm wavelength of 0.2% or smaller, and a light transmittance at 940 nm wavelength of 3.0% or larger.

15. A formed article formed of the resin composition described in any one of claims 1 to 14.

16. A kit comprising:
the resin composition described in any one of claims 1 to 14; and
a light-absorbing resin composition that contains a thermoplastic resin and a light-absorbing coloring matter.

17. A method for manufacturing a formed article, the method comprising laser-welding a formed article formed of the resin composition described in any one of claims 1 to 14, with a formed article formed of a light-absorbing resin composition that contains a thermoplastic resin and a light-absorbing coloring matter.

18. A car-borne camera component formed of the resin composition described in any one of claims 1 to 14, or formed with use of the kit described in claim 16.

19. A car-borne camera comprising the car-borne camera component described in claim 18.
